(19) Europäisches Patentamt / European Patent Office / Office européen des brevets

(11) **EP 4 459 465 A1**

(12) **EUROPEAN PATENT APPLICATION**

(43) Date of publication:
**06.11.2024 Bulletin 2024/45**

(21) Application number: **24170553.2**

(22) Date of filing: **16.04.2024**

(51) International Patent Classification (IPC):
**G06F 9/50** (2006.01)

(52) Cooperative Patent Classification (CPC):
**G06F 9/5077**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.05.2023 FI 20235485**

(71) Applicant: **Nokia Solutions and Networks Oy 02610 Espoo (FI)**

(72) Inventors:
• **DERAKHSHAN, Fariborz**
  **90491 Nuremberg (DE)**
• **RÖßLER, Horst**
  **70794 Filderstadt (DE)**

(74) Representative: **Nokia EPO representatives Nokia Technologies Oy Karakaari 7 02610 Espoo (FI)**

(54) **VIRTUAL NETWORK FUNCTION MANAGEMENT**

(57) According to an example aspect of the present invention, there is provided an apparatus configured at least to receive a request for an action handled by virtualized network functions or cloud-native network functions, C/VNFs, of a first type, select a C/VNF to serve the request from a set of C/VNFs, wherein individual C/VNFs of the set are in one of three modes: active mode, retired idle mode or initialized idle mode, or instantiate and select a new C/VNF to serve the request, and assign the request to the selected C/VNF.

FIGURE 1

EP 4 459 465 A1

**Description**

FIELD

The present disclosure relates to management of virtual network functions, VNFs, for example in the context of a cellular communication network.

BACKGROUND

Communication networks comprise nodes tasked with different functions. For example in the case of a cellular communication network, the network comprises a radio-access network, RAN, and a core network, CN. The RAN comprises RAN nodes, such as base stations, and the CN comprises CN nodes, which are tasked with functions affecting the network as a whole. Examples of functions of CN nodes include maintenance of subscriber registers, switching connections, controlling the RAN and enforcing network policies.

Nodes of a network may be physical nodes, which are computational substrates configured with software to perform a function, or functions, of the node. Such physical nodes may be standalone devices connected to other physical nodes using wire-line connections, for example. On the other hand, nodes of a network may be virtualized network functions, VNFs, which are logical nodes running on physical computational substrates. One physical substrate may run one or more than one VNF, whereas each VNF performs the functions of the node in a similar manner as a physical node would. From the point of view of other network nodes, it makes little difference whether a node is implemented as a VNF or as a physical node. Also other kinds of functions of a network may be virtualized as a VNF, a VNF need not correspond to a logical network node.

Base stations perform various computing processes, such as header and encryption handling, in accordance with protocols which are implemented in these base stations. Base stations may be unitary or distributed in nature.

SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising at least one processing core and at least one memory storing instructions that, when executed by the at least one processing core, cause the apparatus at least to receive a request for an action handled by virtualized network functions or cloud-native network functions, C/VNFs, of a first type, select a C/VNF to serve the request from a set of C/VNFs, wherein individual C/VNFs of the set are in one of three modes: active mode, retired idle mode or initialized idle mode, or instantiate and select a new C/VNF to serve the request, and assign the request to the selected C/VNF.

According to a second aspect of the present disclosure, there is provided a method comprising receiving, in an apparatus, a request for an action handled by virtualized network functions or cloud-native network functions, C/VNFs, of a first type, selecting a C/VNF to serve the request from a set of C/VNFs, wherein individual C/VNFs of the set are in one of three modes: active mode, retired idle mode or initialized idle mode, instantiating and selecting a new C/VNF to serve the request and assigning the request to the selected C/VNF.

According to a third aspect of the present disclosure, there is provided a non-transitory computer readable medium having stored thereon a set of computer readable instructions that, when executed by at least one processor, cause an apparatus to at least receive a request for an action handled by virtualized network functions or cloud-native network functions, C/VNFs, of a first type, select a C/VNF to serve the request from a set of C/VNFs, wherein individual C/VNFs of the set are in one of three modes: active mode, retired idle mode or initialized idle mode, or instantiate and select a new C/VNF to serve the request, and assign the request to the selected C/VNF.

BRIEF DESCRIPTION OF THE DRAWINGS

FIGURE 1 illustrates an example system in accordance with at least some embodiments of the present invention;

FIGURE 2A illustrates VNF lifetimes;

FIGURE 2B illustrates VNF lifetimes;

FIGURE 3 illustrates an example apparatus capable of supporting at least some embodiments of the present invention;

FIGURE 4 is a flow chart in accordance with at least some embodiments of the present invention, and

FIGURE 5 is a flow graph of a method in accordance with at least some embodiments of the present invention.

EMBODIMENTS

Methods are disclosed herein, which enable effective control of VNFs in a system, such that an overall number of active VNFs is kept reasonable, to avoid wasting energy and computational resources, such as memory, in upkeep of unnecessary VNFs in idle mode. Retired VNFs are kept in an idle mode for a time before deletion to enable their re-use in handling incoming requests, such that new VNFs need not be instantiated very often as a response to incoming requests. Further, only a reasonable number of newly initialized VNFs are kept idle to enable serving bursts of incoming requests. The VNFs used may run virtualized microservices, for example microservices which correspond to functionalities performed in a RAN node, such as compression and/or encryption procedures, for example. While discussed herein primarily in terms of VNFs, the principles of the present disclosure also relate to cloud-native network functions, CNFs. The acronym C/VNF is used herein to refer to either VNF or CNF.

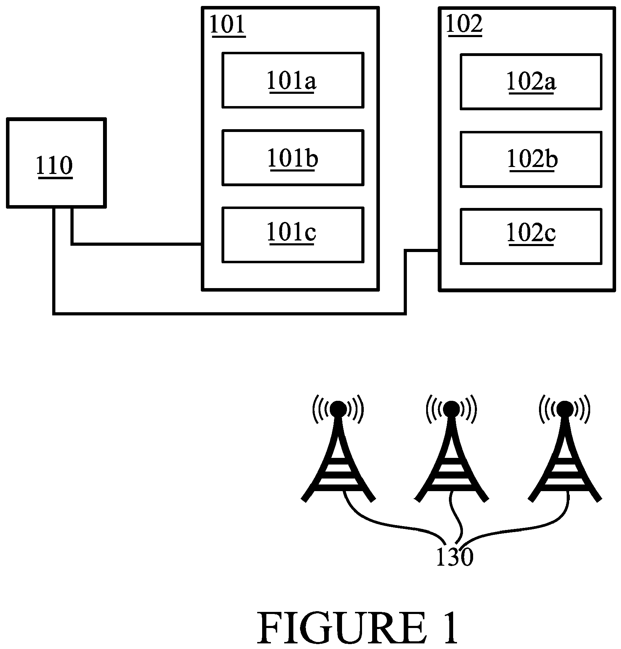

FIGURE 1 illustrates an example system in accordance with at least some embodiments of the present invention. While the example of FIGURE 1 is a cellular communication system, embodiments of the present disclosure are applicable also with different kinds of networks.

Controller 110 is configured to handle requests incoming in the network. These requests relate to functions performed by network nodes, wherein in the system of FIGURE 1, at least some of these nodes are VNFs. Examples of such nodes include mobility management entities, MMEs, access and mobility management entities, AMFs, and serving general packet radio service support nodes, SGSNs. Requests are served by assigning them to a VNF for processing. The requests may comprise indications as to a maximum acceptable latency, which, when present, sets a maximum time the network may use in serving the request. The VNFs

Base stations 130 are in a radio-access network, RAN, of the overall network. Base stations 130 may be unitary base stations, or at least one of them may be a distributed base station. A distributed base station comprises a centralized unit, CU, and one or more distributed unit, DU. The DUs are furnished with radio parts and may handle radio link control, RLC, and medium access control, MAC, functions, while the CU may be configured to handle radio resource control, RRC, and packet data convergence protocol, PDCP, functions, for example. In a realistic physical network, the number of base stations may be in the hundreds, or even thousands, rather than the one illustrated in FIGURE 1. The CU may further have logical node CU-UP for handling the user plane and logical node CU-CP for handling the control plane. The CU-UP and CU-CP may run on a same physical computing substrate, for example, or on separate computing substrates. The CU-CP may be configured to run the RRC and a control plane part of the PDCP protocol, while the CU-UP may be configured to run the user-plane part of the PDCP protocol, and service data adaptation protocols, SDAP, for example. An E1 interface may connect the CP-CP to the CP-UP while an F1-C interface may connect the CP-CP to the DU(s) in a network based on 3rd generation partnership project, 3GPP, standards.

A computational substrate running functions of a CU may perform functions in VNFs which are virtualized microservices. For example, SDAP and PDCP function entities may be run as VNFs, wherein such VNFs may themselves be comprised of other VNFs configured to run parts of the respective protocols. Such parts may include compression, decompression, ciphering and deciphering, for example. For example, a transmission packet header compression or decompression of a single bearer may be served by a single VNF each for uplink and downlink packets.

Computing substrates 101 and 102 are configured to run plural VNFs each. the VNFs need not be of a same type, rather, computing substrates 101 and 102 may be general-purpose computers, such as servers in a server farm or cloud computing centre. For example, at least one of the computing substrates may run in a CU of a base station, in a unitary base station, or as a core network server. Computing substrate 101 has three sets of VNFs, active mode VNFs 101a, retired idle mode VNFs 101b and initialized idle mode VNFs 101c. The VNFs in these sets need not all be of the same type, for example there may be VNFs of plural types in the set of active mode VNFs 101a. Computing substrate 102 has likewise three sets of VNFs, active mode VNFs 102a, retired idle mode VNFs 102b and initialized idle mode VNFs 102c. Sets 101a, 101b and 101c form a first superset, Sets 102a, 102b and 102c form a second superset, sets 101a and 102a for a third superset, sets 101b and 102b form a fourth superset and sets 101c and 102c form a fifth superset. The number of computational substrates need not be two, but may be one, or more than two. Two have been included in FIGURE 1 for the same of clarity of the illustration.

Responsive to receiving a request, controller 110 is configured to select a VNF to run the request. In some cases, for example when the request is not urgent, it may be assigned to an active VNF from set 101a or 102a, or a set comprising sets 101a and 102a. An advantage from using a retired idle VNF from sets 101b or 102b is that such a VNF may start processing the request at once. Further, a retired VNF has already been instantiated and configured, wherefore using a retired VNF, as opposed to a new one, provides the further benefit that the rate at which new VNFs need to be instantiated and configured is reduced, which reduces computational complexity.

In case no suitable retired, idle VNF is available, an initialized idle mode VNF may be selected from set 101c or 102c, or a set comprising sets 101c and 102c. Using an already initialized, idle VNF provides the advantage that less delay is incurred, than responding to the incoming request by instantiating and configuring a new VNF.

The VNFs may be classified into different types based on the kind of processing they provide. A request may request a specific, single processing type, or a request may be of a type which triggers a sequence of VNFs to be used. The sequence of VNFs may be considered an aggregate VNF of a specific type, as well. In general, when an active VNF finishes processing, it may transition to the retired idle state and notify controller 110 of this. A length of time a VNF remains in the retired idle state is referred to herein as a lifetime extension, LTE. The LTE may be different for different VNF types. A LTE may be varied during operation, and an initial value for the LTE may be between 5% and 10% of the time it takes for a VNF of the respective type to complete processing its task. How the LTE may be varied will be discussed in more detail herein below.

Varying the LTE helps ensure an excessive number of VNFs is not kept running idle, thus using resources, for a long time while waiting for new requests. The overall set of VNFs may be dynamically adapted to changing demand. Overall, thus a VNF may first be instantiated and configured to be kept in the initialized idle mode, then it may be assigned a request to serve, rendering it into the active mode, after which the VNF may spend the LTE in retired idle mode, before being deactivated and removed from memory to release memory space for VNFs of other types, more in demand.

The LTE may be dependent on both CNF type and a prevailing load status. The LTE per VNF type may be adapted based at least in part on an average interval between incoming requests of a type which are served by the respective VNF type. In particular, when the average time interval between arriving requests is larger than the a sum of the request serve time and the LTE, the LTE may be increased, and when the average time interval between arriving requests is smaller than the a sum of the request serve time and the LTE, the LTE may be reduced. In other words, when the frequency of arriving requests declines, the LTE may be reduced and when the frequency of arriving requests of the relevant type increases, the LTE may be increased. The LTE may be reduced and increased in steps of one percent of the request serve time, for example, the request serve time being the length of time it takes the VNF to serve the request. The LTE may be adjusted, and the adjusted LTE be assigned to a VNF in connection with assigning a request to the VNF. In at least some embodiments, VNFs already handling requests do not have their LTEs adjusted.

In optimal use, incoming requests can be immediately allocated to a retired C/VNF in idle mode for processing. Now in a pool with a number N of VNFs, the probability to find one of them in idle mode at a time point increases with their lifetime extension. This becomes clearer, by regarding two extreme cases: firstly, when the lifetime extensions falls, that is, LTE approaches zero, then the probability to find a VNF in retired idle mode falls. Secondly, when the lifetime extension increases, that is, LTE approaches infinity, then the probability to find a VNF in the retired idle mode increases. In case of an increasing frequency of incoming requests, more requests become allocated to the retired C/VNFs in idle mode, such that their population decreases: N approaches zero. Therefore, the probability to find one VNF in idle mode falls. This probability drop can be countered by increasing the lifetime extensions of the VNFs: LTE approaches infinity, corresponding to the second case mentioned above.

In case of a decreasing frequency of incoming requests, fewer requests become allocated to the retired VNFs in idle mode. Thus, the population N of VNFs can be additionally reduced by shortening their lifetime extensions LTE toward zero to contract their useless staytime in idle mode.

The number of initialized idle VNFs, corresponding to sizes of sets 101c and 102c, may be kept at a minimum level needed to provide an acceptable level of service, since idle VNFs consume memory, and furthermore configuring new VNFs consumes some computing resources. Thus in an ideal state, requests would be primarily assigned to retired idle VNFs, and, possible, active VNFs. The initialized idle VNFs may be used to serve bursts of requests of a specific type.

When controller 110 receives a request it selects a VNF of a type configured to serve the incoming request from a list of currently, retired idle VNFs. If there is no suitable retired VNF available, controller 110 may select a VNFs from among the suitable initialized idle VNFs. The controller, or another node, deletes the VNFs from a list of available VNF instances as soon as their LTE expires. Such VNFs are deactivated and removed. Controller 110 may be configured to selected a retired VNF with the shortest remaining part of LTE remaining. Such a selection enhances the availability of retired VNFs of this type, since the others have more LTE remaining to wait for incoming requests. The number of initialized idle VNFs may also be dynamically managed. If the number is declines below a threshold number, the pool may be automatically enhanced by instantiating and initializing additional VNFs. In some embodiments, a machine learning solution, such as an artificial neural network, is used to predict incoming request patterns in advance, and to increase a number of VNFs in the initialized idle mode to anticipate an incoming burst of requests. Such a machine learning solution may be trained using training data recorded from live use in the network, where patterns in traffic are captured. The dynamic adaptation of the LTE minimized the number of VNFs running idle for a long time, which conserves computation resources. The length of the LTE may also be dependent on a network operator's policy.

Once a VNF finishes processing a request, as mentioned above, it may notify controller 110 by sending a notification. The notification may comprise, for example, an identity of the VNF sending the notification, and type of the request served and/or a type of the VNF. The notification may further comprise a time the VNF took to process the request and a value of the LTE. It may further comprise an indication of a predicted deactivation time, when the LTE will expire unless the VNF is provided a further request during the LTE.

Concerning the functioning of controller 110, it receives the requests from clients, which may comprise a core network entity, or one of the VNFs in a base station, such as in a CU, for example. The controller may determine the number of incoming requests $R_T$ for each request type T. Further, controller 110 may be configured to determine an average number of requests, $\bar{R}_T$, of requests of type T:

$$\bar{R}_T = \frac{\sum_{i=1}^{N_T} R_{T,i}}{N_T}$$

where $R_T$ is a number of received requests within a time window. Controller 110 may further be configured to determine a standard deviation $\sigma_{R,T}$ of requests $R_T$ of type T. Further, controller 110 may be configured to register processing times from VNFs notifying the controller they have completed processing a request assigned to them. Similarly, the LTE of VNFs entering the retired idle mode may be recorded by controller 110. The controller may also determine an average processing time $\bar{\tau}_T$ of requests of type T:

$$\bar{\tau}_T = \frac{\sum_{i=1}^{N(VNF_{T,r})} \tau_{T,r,i}}{N(VNF_{T,r})},$$

where i is a job index.

Similarly, a standard deviation $\sigma_{T,T}$ of processing times $\tau_T$ of requests per each type T may be determined by the controller 110.

When the LTE is short, the population of retired idle VNFs is lower than when the LTE is longer. With a short TLE, more initialized idle VNFs may need to be used to serve incoming requests. In case initialized idle VNFs run out, or are near to running out, fresh VNFs may be need to be instantiated and configured to serve the incoming requests. A longer LTE increases the number of retired idle VNFs, such that their maintenance in idle mode will consume more resources, however they will be available to serve incoming requests with very short delay.

To enable optimized serving of incoming requests, a number of retired idle VNFs of each type available in a time period should be equal to a number of incoming requests of the corresponding type. To achieve this, the number of incoming requests may be continuously monitored by controller 110, to obtain a continuously updated average number of incoming requests, per type, per time period Δt. The number of retired idle VNFs is increased or decreased by lengthening or shortening their mean LTE such that

$$\bar{\tau}_T + \bar{\Delta}_T L = \bar{\lambda}_T$$

$$\bar{\Delta}_T L = \bar{\lambda}_T - \bar{\tau}_T$$

Here $\bar{\Delta}_T L$ denotes the mean LTE for VNFs of type T, $\bar{\lambda}_T$ denotes the average inter-arrival time of requests of type T, and $\bar{\tau}_T$ denotes a mean processing time of request of type T.

The number of initialized idle VNFs may be selected as equal to $\rho\sigma_{R,T}$ standard deviations of the number $R_T$ of incoming requests of type T. Here ρ may be selected as two or three, for example.

Using these principles, most of the incoming requests may be served by retired idle NFVs, and the remainder may be served by initialized idle NFVs. Using a smaller ρ, such as 2, is a resource saving tactic, keeping fewer initialized idle NFVs in readiness to serve requests which cannot be served by the retired idle NFVs. Using a higher ρ, such as 3, is a tactic emphasizing lower delays by keeping more initialized idle NFVs in readiness to serve requests, rendering rarer the situation where a new NFV needs to be instantiated responsive to an incoming request, or assigning a request to an active NFV.

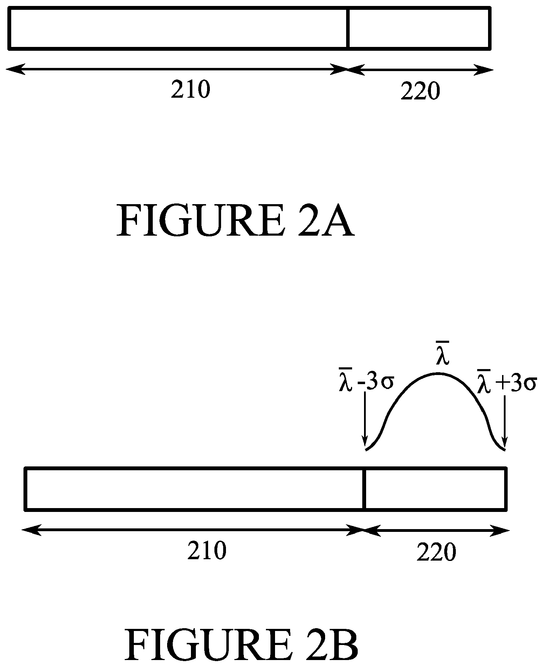

FIGURE 2A illustrates VNF lifetimes. Time advances from the left to the right. Length of time 210 corresponds to $\bar{\tau}$, a mean processing time of a request, and length of time 220 corresponds to $\bar{\Delta}L$, the mean LTE of a VNF of this type. Thus a VNF would be in the active mode during the time it processes a request, 210, and after that for length of time 220, the LTE, in retired idle mode while it waits for a possibly arriving new request of the type it is configured to handle. A new request arriving during length of time 210 would preferably not be assigned to this VNF since this VNF is busy handling an earlier request. If a new request arrives during length of time 220, the LTE, this then retired, idle VNF would be a good choice to handle this new request. On the other hand if a new request arrives only after length of time 220 has expired, this VNF will have been deactivated and thus it is no longer available to handle this new request.

FIGURE 2B illustrates VNF lifetimes. Like numbering denotes like structure as in FIGURE 2A. Here $\bar{\lambda}$ marks the average time between the arrivals of two consecutive requests of the type handled by this VNF. This time begins from the beginning of length of time 210 and ends midway through the LTE 220, as illustrated. In the situation of FIGURE 2B, plus or minus three standard deviations, σ, in the distribution of times between consecutive arrivals of requests correspond to the start and the end of the LTE.

In a medium traffic situation, an average number of requests $R_T$ of type T arrive with an average interarrival time $\bar{\lambda}_T$, denoted $\bar{\lambda}$ in FIGURE 2B, which is larger than the average request processing time $\bar{\tau}$, corresponding to length of time 210, but smaller than a sum of the average request processing time 210 and LTE 220. This medium-traffic situation may be expressed as $\bar{\tau} < \bar{\lambda} < \bar{\tau} + LTE$.

In this case, the average number of retired idle VNFs will remain constant, since incoming requests may be assigned to the set of retired idle VNFs. The LTE provides the advantage, that it keeps the retired VNFs alive, so that they can process incoming requests with also slightly wider variances in arrival rate.

In a high traffic case, requests of type T arrive with an average interarrival time $\bar{\lambda}_T$ which is shorter than the average request processing time $\bar{\tau}_T$: $\bar{\lambda} < \bar{\tau}$. In this case the population of retired idle VNFs will decline and eventually be depleted, and controller 110 will begin to rely on initialized idle VNFs to serve the incoming requests. The set of initialized idle VNFs may need to be augmented by instantiating new VNFs into the set of initialized idle VNFs to avoid exhaustion of the available VNFs.

In a low traffic case, requests of type T arrive with an average interarrival time $\bar{\lambda}_T$ which is longer than the average request processing time $\bar{\tau}_T$: $\bar{\lambda} > \bar{\tau} + LTE$. In this case the population of retired idle VNFs will gradually be deactivated, causing their set to decline in number. Requests may be assigned to initialized idle VNFs, or active VNFs. As the number of requests is low in the low traffic case, it is not challenging from a resource management perspective.

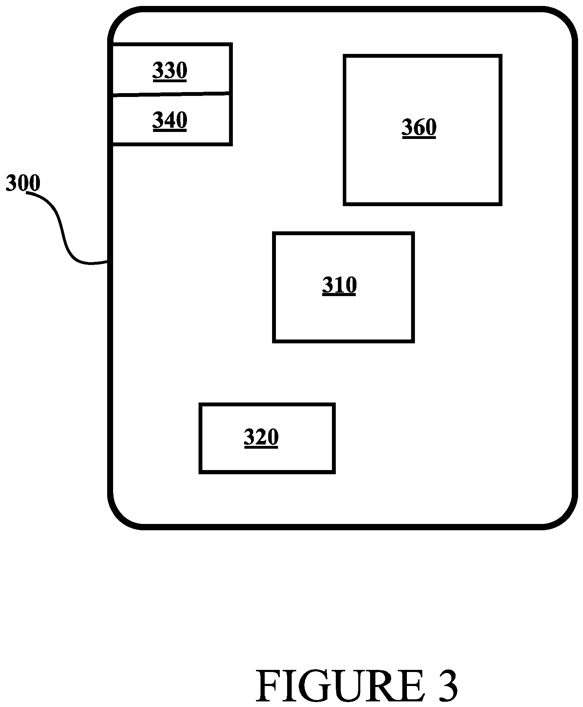

FIGURE 3 illustrates an example apparatus capable of supporting at least some embodiments of the present invention. Illustrated is device 300, which may comprise, for example, controller 110 of FIGURE 1. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300, such as receiving, selecting, assigning, adjusting, reducing and initializing. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as controller, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300. Memory 320 may be non-transitory. The term "non-transitory", as used herein, is a limitation of the medium itself (that is, tangible, not a signal) as opposed to a limitation on data storage persistency (for example, RAM vs. ROM).

Device 300 may comprise a transmitter 330. Device 300 may comprise a receiver 340. Transmitter 330 and receiver 340 may be configured to transmit and receive, respectively, information in accordance with at least one standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure virtualization parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3

Processor 310, memory 320, transmitter 330, receiver 340, and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

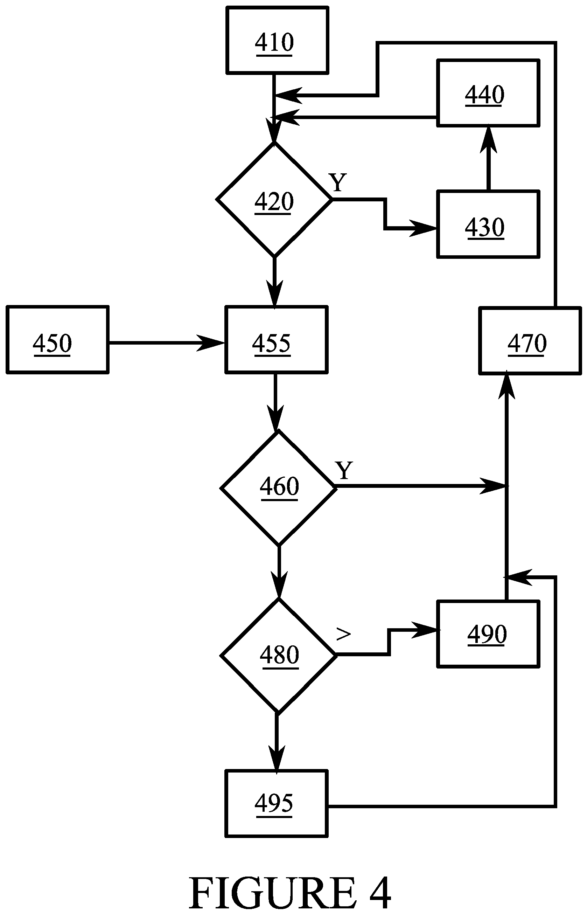

FIGURE 4 is a flow chart in accordance with at least some embodiments of the present invention. A request arrives in the controller in stage 410, from which processing advances to stage 420, where it is determined, if the number of retired idle VNFs of a type handling the request is zero. If the number is zero, processing advances to stage 430, where an initialized idle VNF is selected to serve the request, and in stage 440 the request of stage 410 is assigned to the selected initialized idle VNF. On the other hand if a retired idle VNF is available, the request of stage 410 will be assigned to the retired idle VNF by advancing to stage 455.

In stage 450, a notification has arrived in controller 110, informing the controller of at least one of request processing time $\tau$ or request arrival times $\lambda$. The controller responds to the notification by calculating, in stage 455, a current average request interarrival time and average processing time of the requests of the type of the request of stage 410. In some embodiments, the average request inter-arrival time and average request processing time are calculated in stage 455 for all request types, or, for example, all request types with at least one request during the past 24 hours. Processing advances from stage 455 to stage 460.

In stage 460, it is determined whether the average time between arrivals of requests, $\lambda$, is greater than the average request processing time $\tau$, but less than a sum of the average request processing time $\tau$ and the LTE. If this is the case, processing advances from stage 460 to stage 470, where the request is assigned to a retired idle VNF.

On the other hand if the comparison in stage 460 returns a negative finding, processing advances to stage 480, where the average time between arrivals of requests, $\lambda$, is compared to a sum of the average request processing time $\tau$ and the LTE. If the $\lambda$ is greater, processing advances to stage 490, where the LTE is increased, whence processing advances to stage 470 and the assigning of the request to a retired idle VNF. If the $\lambda$ is not greater than the sum of $\tau$ and the LTE, processing advances from stage 480 to stage 495, where the LTE is reduced, before advancing to stage 470 and the assignment of the request to a retired idle VNF. The modified LTE may thus be assigned to the VNF in connection with assignment of the request for the VNF to handle.

In general, by increasing or reducing the LTE, it may be meant that the LTE is thus modified for newly instantiated VNFs while leaving the LTE unchanged in VNFs which are already in the system. This conserves resources in terms of reducing the amount of signalling in the system. In some embodiments, the LTE is assigned to the VNF in connection with assigning the request to the VNF. In these cases, increasing or reducing the LTE means increasing or reducing the LTE assigned to the VNFs in connection with assigning the request for the VNF to handle.

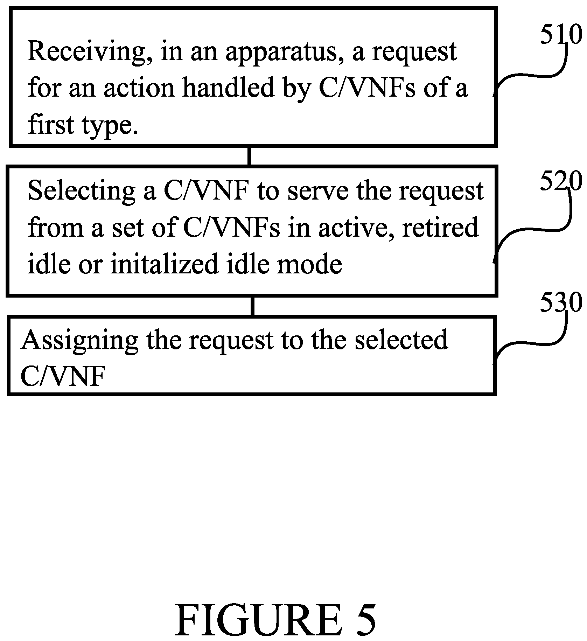

FIGURE 5 is a flow graph of a method in accordance with at least some embodiments of the present invention. The phases of the illustrated method may be performed in controller 110, or in a control device configured to control the functioning thereof, when installed therein. Phase 510 comprises receiving, in an apparatus, a request for an action handled by virtualized network functions or cloud-native network functions, C/VNFs, of a first type. Phase 520 comprises selecting a C/VNF to serve the request from a set of C/VNFs, wherein individual C/VNFs of the set are in one of three modes: active mode, retired idle mode or initialized idle mode, instantiating and selecting a new C/VNF to serve the request.

Finally, phase 530 comprises assigning the request to the selected C/VNF.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in managing virtualization of functions, such as microservices, for example.

ACRONYMS LIST

| | |
|---|---|
| CU | centralized unit |
| CNF | cloud-native network functions |
| DU | distributed unit |
| MAC | medium access control |
| PDCP | packet data convergence protocol |
| RAN | radio access network |
| RRC | radio resource control |
| SDAP | service data adaptation protocols |
| VNF | virtualized network function |

**Claims**

1. An apparatus comprising at least one processing core and at least one memory storing instructions that, when executed by the at least one processing core, cause the apparatus at least to:

    - receive a request for an action handled by virtualized network functions or cloud-native network functions, C/VNFs, of a first type;
    - select a C/VNF to serve the request from a set of C/VNFs, wherein individual C/VNFs of the set are in one of three modes: active mode, retired idle mode or initialized idle mode, or instantiate and select a new C/VNF to serve the request, and
    - assign the request to the selected C/VNF.

2. The apparatus according to claim 1, wherein the apparatus is configured to adjust a length of time C/VNFs of the first type remain in the retired idle mode based on a frequency at which requests handled by the C/VNFs of the first type are received in the apparatus.

3. The apparatus according to claim 2, wherein the apparatus is configured to reduce the length of time C/VNFs of the first type remain in the retired idle mode when the frequency of requests declines, to increase the length of time C/VNFs of the first type remain in the retired idle mode when the frequency of requests increases, and to assign the reduced or increased length of time C/VNFs of the first type remain in the retired idle mode to the selected C/VNF in connection with the assigning of the request to the selected C/VNF.

4. The apparatus according to any preceding claim, wherein C/VNFs in the initialized idle mode are C/VNFs to which the apparatus has not assigned a request to handle.

5. The apparatus according to any preceding claim, wherein C/VNFs in the retired idle mode are C/VNFs from which the apparatus has received a notification, that the C/VNFs have finished processing a request.

6. The apparatus according to any preceding claim, wherein the apparatus is configured to select a number of initialized idle mode C/VNFs of the first type based on a variance of a number of incoming requests per time unit, the requests handled by the C/VNFs of the first type.

7. The apparatus according to claim 6, wherein the apparatus is configured to select a larger number of initialized idle mode C/VNFs of the first type when the variance is higher, and a smaller number of initialized idle mode C/VNFs of the first type when the variance is lower.

8. The apparatus according to any of claims 6-7, wherein the apparatus is configured to initialize C/VNFs into the initialized idle mode.

9. The apparatus according to any preceding claim, further configured to receive finish notifications from C/VNFs, individual finish notifications indicating that a C/VNF having sent the respective finish notification has completed processing a request and that the C/VNF has entered retired idle mode.

10. The apparatus according to any preceding claim, further configured to receive a request for an action handled by C/VNFs of a second type, to select a C/VNF of the second type to serve the request from a second set of C/VNFs, wherein individual C/VNFs of the second type in the second set are in one of three modes: the active mode, the retired idle mode or the initialized idle mode, and to assign the request to the selected C/VNF of the second type.

11. A method comprising:

- receiving, in an apparatus, a request for an action handled by virtualized network functions or cloud-native network functions, C/VNFs, of a first type;
- selecting a C/VNF to serve the request from a set of C/VNFs, wherein individual C/VNFs of the set are in one of three modes: active mode, retired idle mode or initialized idle mode, instantiating and selecting a new C/VNF to serve the request and
- assigning the request to the selected C/VNF.

12. The method according to claim 11, further comprising adjusting a length of time C/VNFs of the first type remain in the retired idle mode based on a frequency at which requests handled by the C/VNFs of the first type are received in the apparatus.

13. The method according to claim 12, wherein the method comprises reducing the length of time C/VNFs of the first type remain in the retired idle mode when the frequency of requests declines, increasing the length of time C/VNFs of the first type remain in the retired idle mode when the frequency of requests increases, and assigning the reduced or increased length of time C/VNFs of the first type remain in the retired idle mode to the selected C/VNF in connection with the assigning of the request to the selected C/VNF.

14. The method according to any of claims 11 - 13, wherein C/VNFs in the initialized idle mode are C/VNFs to which the apparatus has not assigned a request to handle.

15. A non-transitory computer readable medium having stored thereon a set of computer readable instructions that, when executed by at least one processor, cause an apparatus to at least:

- receive a request for an action handled by virtualized network functions or cloud-native network functions, C/VNFs, of a first type;
- select a C/VNF to serve the request from a set of C/VNFs, wherein individual C/VNFs of the set are in one of three modes: active mode, retired idle mode or initialized idle mode, or instantiate and select a new C/VNF to serve the request, and
- assign the request to the selected C/VNF.

**FIGURE 1**

# FIGURE 2A

# FIGURE 2B

330

340

360

300

310

320

# FIGURE 3

FIGURE 4

Receiving, in an apparatus, a request for an action handled by C/VNFs of a first type.    510

Selecting a C/VNF to serve the request from a set of C/VNFs in active, retired idle or initalized idle mode    520

Assigning the request to the selected C/VNF    530

# FIGURE 5

Europäisches
Patentamt

European
Patent Office

Office européen
des brevets

# EUROPEAN SEARCH REPORT

Application Number

EP 24 17 0553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/059248 A1 (AMAZON TECHNOLOGIES, INC.) 6 April 2017 (2017-04-06) * abstract * * paragraphs [0004], [0017] - [0019], [0027] - [0029], [0033], [0036] - [0040] * | 1-15 | INV. G06F9/50 |
| A | BABANGIDA, KAMALRUKNIZAM ABU, SOPERI MOHD, MUHAMMED: "Adaptive and Hybrid Idle-Hard Timeout Allocation and Flow Eviction Mechanism Considering Traffic Characteristics", ELECTRONICS, vol. 9, no. 11, 23 November 2020 (2020-11-23), pages 1-18, XP093201251, Basel, Switzerland * the whole document * | 1-15 | |
| A | US 2022/159501 A1 (APPLE, INC.) 19 May 2022 (2022-05-19) * the whole document * | 1-15 | **TECHNICAL FIELDS SEARCHED (IPC)** G06F |
| A | US 10 489 184 B2 (AT & T INTELLECTUAL PROPERTY I, L.P.) 26 November 2019 (2019-11-26) * the whole document * | 1-15 | |

The present search report has been drawn up for all claims

| Place of search | Date of completion of the search | Examiner |
|---|---|---|
| The Hague | 5 September 2024 | Tomàs Blanch, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0553

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | | Publication date | Patent family member(s) | | Publication date |
|---|---|---|---|---|---|
| WO 2017059248 | A1 | 06-04-2017 | AU 2016331917 | A1 | 12-04-2018 |
| | | | CA 2999282 | A1 | 06-04-2017 |
| | | | CN 108139940 | A | 08-06-2018 |
| | | | EP 3356938 | A1 | 08-08-2018 |
| | | | JP 6559338 | B2 | 14-08-2019 |
| | | | JP 2018536213 | A | 06-12-2018 |
| | | | KR 20180059528 | A | 04-06-2018 |
| | | | US 2017090961 | A1 | 30-03-2017 |
| | | | WO 2017059248 | A1 | 06-04-2017 |
| US 2022159501 | A1 | 19-05-2022 | US 2022159501 | A1 | 19-05-2022 |
| | | | WO 2020167820 | A1 | 20-08-2020 |
| US 10489184 | B2 | 26-11-2019 | NONE | | |

EPO FORM P0459

For more details about this annex : see Official Journal of the European Patent Office, No. 12/82